# EUROPÄISCHE PATENTSCHRIFT

(11) **EP 3 760 403 B1**
(45) Veröffentlichungstag und Bekanntmachung des Hinweises auf die Patenterteilung: **07.06.2023**
(21) Anmeldenummer: 19183998.4
(22) Anmeldetag: 02.07.2019
(51) Int. Cl.: B27N 3/18, B27N 7/00, B05D 7/06, B27N 3/04, B32B 21/02, B32B 21/06, B32B 27/06

(54) **VERFAHREN ZUM BESCHICHTEN EINES PLATTENFÖRMIGEN WERKSTÜCKS**
METHOD OF COATING A PANEL-SHAPED WORKPIECE
PROCÉDÉ DE REVÊTEMENT D'UNE PIÈCE À USINER EN FORME DE PLAQUE

(43) Veröffentlichungstag der Anmeldung: 06.01.2021
(60) Teilanmeldung: 22176994.6
(73) Patentinhaber: SWISS KRONO Tec AG, 6004 Luzern (CH)
(72) Erfinder: BRAUN, Roger, 6130 Willisau (CH); HASCH, Prof. Dr. Joachim, 10317 Berlin (DE); Kalwa, Dr. Norbert, 32805 Horn-Bad Meinberg (DE)
(74) Vertreter: Kalkoff & Partner Patentanwälte mbB

(56) Entgegenhaltungen:
- EP-A1- 3 189 950
- EP-A1- 3 208 086
- EP-A1- 3 725 481
- WO-A1-2006/002015
- WO-A1-2009/050565
- WO-A2-2009/065769
- US-A- 5 492 756
- US-A1- 2015 017 461
- US-A1- 2015 197 942

## Beschreibung

Die Erfindung betrifft ein Verfahren zum Beschichten eines plattenförmigen Werkstücks, einen beschichteten plattenförmigen Werkstoff und die Verwendung des beschichteten plattenförmigen Werkstücks.

Plattenförmige Werkstücke können zwar grundsätzlich auch ohne Beschichtung eingesetzt werden, für die meisten Verwendungszwecke wird jedoch eine Beschichtung aufgebracht, sowohl um die Gebrauchstüchtigkeit des Werkstücks zu steigern, als auch um den ästhetischen Eindruck des Werkstücks zu verbessern. Die Zusammensetzung des Werkstoffs eines plattenförmigen Werkstücks bestimmt, in welcher Weise das Werkstück am besten beschichtet werden kann.

Vorliegend ist ein plattenförmiges Werkstück in seinen Gebrauchseigenschaften zu verbessern, das mehr als 50 Gew.-% Bindemittel und des Weiteren lignocellulosische Fasern sowie ggf. Füllstoffe aufweist. Allgemein sind solche plattenförmigen Werkstücke aus der EP 3 189 950 A1 und der EP 3 208 086 A1 bekannt. Die US 2015/017461 A1 offenbart ein plattenförmiges Werkstück mit Außenlagen, die einen hohen Bindemittelanteil aufweisen. Diese Aufgabe wird gelöst mit dem Verfahren nach Anspruch 1 und mit dem plattenförmigen Werkstück nach Anspruch 9. Es hat sich überraschend herausgestellt, dass dieses plattenförmige Werkstück sich mit allen bekannten Beschichtungstechniken beschichten lässt.

Das zu beschichtende plattenförmige Werkstück ist aus einem Werkstoff hergestellt, der lignocellulosische Fasern und Bindemittel sowie optional Füllstoffe aufweist, wobei der Anteil des Bindemittels mindestens 50 Gew.-% beträgt. Der Bindemittelanteil wird auch bezogen auf den atro Faseranteil berechnet und kann von 101 Gew.-% bis zu 500 Gew.-% Bindemittel betragen (atro bedeutet im Zusammenhang mit dieser Erfindung, dass der Faseranteil bei 105 °C bis zur Gewichtskonstanz getrocknet ist). Ein solcher Werkstoff ist in der EP-Patentanmeldung 19170159.8 beschrieben. Als Bindemittel sind erfindungsgemäß Melamin-Formaldehyd-Harze, Phenol-Formaldehyd-Harze, Methylendiphenyldiisocyanat (MDI), auch in emulgierter Form als eMDI, polymeres Diphenylmethandiisocyanat (PMDI) oder Mischungen der vorgenannten Bindemittel geeignet. Das Bindemittel des Werkstoffs, insbesondere Melamin, kann durch den Zusatz von Elastomeren oder Thermoplasten, z. B. durch Zusatz von Polyvinylacetat (PVAc), von Acrylaten oder einer Polyurethandispersion (PU-Dispersion) elastifiziert werden. Diese Zusätze zum Kunstharz werden in einer Menge von 1 Gew.-% bis 10 Gew.-% bezogen auf die Menge des Feststoffs des eingesetzten Kunstharzes eingesetzt. Thermoplastische Kunststoffe werden jedoch bevorzugt nicht als Hauptbestandteil des Bindemittels eingesetzt, vor allem nicht als mengenmäßiger Hauptbestandteil. Dem Werkstoff können weitere natürliche oder synthetische Fasern, anorganische oder organische Fasern oder Mischungen von Fasern, insbesondere der vorgenannten Fasern beigemischt sein. Der plattenförmige Werkstoff kann Füllstoffe, insbesondere nicht-hygroskopische oder nicht-quellende Füllstoffe enthalten. Die Füllstoffe können aus mineralischem, keramischem, synthetischem Material oder aus Glas bestehen. Der plattenförmige Werkstoff kann eine Dickenquellung von bis zu 4%, bevorzugt von bis zu 3%, vorzugsweise von unter 2% aufweisen. Nassfestmittel können zur Reduzierung der Dickenquellung eingesetzt werden. Typische Nassfestmittel sind z. B. Polyamine, Polyimine, Polyamide oder Polyalkohole; sie werden in einer Menge von bis zu 5 Gew.- %, typisch von bis zu 1 Gew.-%, mindestens 0,05 Gew.-% eingesetzt. Ergänzend können Hydrophobierungsmittel eingesetzt werden, z. B. Paraffin oder Wachs, die typischerweise in Mengen von bis zu 5 Gew.-%, bevorzugt in Mengen von bis zu 2 Gew.-%, meist in Mengen von 0,1 Gew.-% bis 1,5 Gew.-% eingesetzt werden.

Das plattenförmige Werkstück weist eine Dicke von 1 mm bis 500 mm, meist zwischen 3 mm und 80 mm auf. Der Werkstoff, aus dem das plattenförmige Werkstück hergestellt ist, weist eine Dichte von 1.000 kg/m³ bis 1.800 kg/m³ auf, meist zwischen 1.000 kg/m³ und 1.600 kg/m³.

Der Werkstoff für das plattenförmige Werkstück nach der Erfindung ist auf bekannten Anlagen zum Herstellen von Holzwerkstoffplatten herstellbar. Fasern werden beleimt, d. h., mit Klebstoff beaufschlagt, zu einem Faserkuchen gestreut und unter Einwirkung von Hitze und Druck in einer Presse zu einem plattenförmigen Werkstoff verpresst. Typische Pressbedingungen sind Temperaturen von 140 °C bis 220 °C, meist 160 °C bis 180 °C und ein Druck von 0,3 N/mm² bis 5,5, N/mm², bevorzugt 1 N/mm² bis 3 N/mm² bei einer Pressdauer von 6 Sekunden/mm Plattenstärke bis 20 Sekunden/mm Plattenstärke. Der plattenförmige Werkstoff kann in jeder Größe hergestellt werden, die die verfügbaren Pressen ermöglichen.

Anders als bei bisher bekannten plattenförmigen Werkstücken, insbesondere solchen aus Holzwerkstoffen, weist die Oberfläche, also die Oberseite, die Unterseite und die Seitenflächen des Werkstücks, aufgrund des verwendeten Werkstoffs weitaus weniger Fasern und stattdessen mehrheitlich ausgehärtetes Bindemittel auf. Es war nicht zu erwarten, dass bisherige Beschichtungsverfahren sich ohne Weiteres für den neuen plattenförmigen Werkstoff anwenden lassen. Es hat sich jedoch herausgestellt, dass es möglich ist, das erfindungsgemäße Verfahren zum Beschichten eines plattenförmigen Werkstücks einzusetzen, dessen Werkstoff lignocellulosische Fasern und einen Anteil von mehr als 50 Gew.-% Bindemittel aufweist, wobei das Verfahren durchgeführt wird mit den Schritten:
- Bereitstellen des plattenförmigen Werkstücks, das eine Oberseite und eine Unterseite und eine Seitenfläche aufweist,
- Auftragen einer Beschichtung,
- Aufbringen eines Dekors,
- Strukturieren der Beschichtung, jeweils mindestens auf einem Abschnitt einer Oberseite, einer Unterseite oder einer Seitenfläche sowie
- ggf. Aushärten der Beschichtung.

Es hat sich herausgestellt, dass die Oberfläche des Werkstücks, die überwiegend aus ausgehärtetem Bindemittel besteht, sich gut beschichten lässt. Beschichtungen haften gut auf der überwiegend durch Kunstharz gebildeten Oberfläche des Werkstücks. Die Bestandteile des Werkstoffs, aus dem das plattenförmige Werkstück hergestellt ist, Bindemittel und Fasern sowie ggf. Füllstoffe sind insbesondere auch für solche Beschichtungen geeignet, die mittels einer Presse unter Anwendung von Druck und hohen Temperaturen aufgebracht werden. Aber auch das Lackieren und das Kaschieren (das Aufkleben von Folien oder Papieren) sind mögliche Formen der Beschichtung. Die einzelnen, nachfolgend erläuterten Beschichtungsmittel und -verfahren können auch kombiniert werden. Die erfindungsgemäß aufgebrachte Beschichtung kann, wie nachstehend im Detail erläutert wird, einschichtig oder mehrschichtig sein. Die Beschichtungen verbessern die Gebrauchseigenschaften des plattenförmigen Werkstücks außerordentlich. Sie schließen u. a. die Oberfläche des Werkstücks gegenüber Feuchtigkeit ab, sie verbessern die Pflegeeigenschaften und sie ermöglichen die ästhetische Gestaltung der Oberfläche des Werkstücks.

Die Erfindung betrifft weiter einen plattenförmigen Werkstoff, aufweisend lignocellulosische Fasern und mehr als 50 Gew.-% Bindemittel, wobei der plattenförmige Werkstoff eine Oberseite, eine Unterseite und eine Seitenfläche aufweist, dadurch gekennzeichnet, dass Oberseite, Unterseite oder Seitenfläche mindestens abschnittsweise mit einer Beschichtung versehen sind, die ein Dekor und eine Struktur aufweist. Die Beschichtung steigert je nach Ausführung die Gebrauchstüchtigkeit des erfindungsgemäßen Werkstücks, beispielsweise in physikalischer Hinsicht (z. B. Temperatur- und Wasserbeständigkeit, Kratzfestigkeit, Abriebfestigkeit, Leitfähigkeit), in chemischer Hinsicht z. B. durch verbesserte Resistenz gegen Säuren und Laugen, alternativ auch in ästhetischer Hinsicht beispielsweise durch das Aufbringen von ansprechenden Dekoren und ggf. Strukturen.

Zur ästhetischen Gestaltung der Oberfläche des Werkstücks wird ein Dekor aufgebracht, also ein im Wesentlichen mindestens aus einer, in der Regel aus zwei oder mehr Farben bestehender, zweidimensionaler Auftrag. Typisch sind Naturdekore wie Holz- oder Steinimitate, aber auch Fantasiedekore. Besonders einfache Dekore zeigen eine einfache farbige Fläche. Das Dekor kann entweder auf die Oberfläche des erfindungsgemäßen Werkstücks bzw. eine darauf aufgebrachte Beschichtung unmittelbar aufgetragen, z. B. aufgedruckt oder gesprüht oder gewalzt werden. Alternativ kann das Dekor auf ein Papier oder eine Folie aufgedruckt werden, wonach das bedruckte Papier oder die bedruckte Folie auf die Oberfläche des plattenförmigen Werkstücks aufgebracht wird. Das Dekor ist in der Regel nicht verschleißfest und wird daher meist durch eine Versiegelung z. B. aus Kunstharz, Lack oder Hotmelt geschützt.

Insbesondere wenn das Dekor Holz nachahmt, aber auch bei anderen Dekoren, verstärkt das erfindungsgemäße Einbringen einer Struktur den Eindruck einer naturgetreuen Abbildung. Die Struktur ist im Gegenteil zum Dekor dreidimensional. Sie ist in der Regel räumlich begrenzt; sie umfasst bei z. B. Holzdekoren meist die Poren. Die Struktur wird meist in eine Beschichtung eingebracht, die oberhalb des Dekors angeordnet ist. Die Struktur kann als Vertiefung in diese Beschichtung oberhalb des Dekors eingebracht werden; alternativ kann die Struktur als Erhebung auf dem Dekor bzw. der Beschichtung oberhalb des Dekors aufgetragen werden. Die Tiefe bzw. die Höhe der Struktur beträgt in der Regel 1 µm bis 400 µm, bevorzugt 10 µm bis 100 µm. Das Einbringen von Vertiefungen erfolgt in der Regel durch eine Prägewalze, die mit korrespondierenden Erhebungen versehen ist. Alternativ können Vertiefungen auch als sogenannte chemische Pore durch die Kombination eines benetzbaren Materials und eines nicht-benetzbaren Materials aufgebracht werden, z.B. durch eine erste Schicht, in der in einer Matrix von benetzbarem Material Abschnitte von nicht-benetzbarem Material jeweils dort aufgetragen werden, wo eine Vertiefung entstehen soll. Anschließend wird eine zweite Schicht von Material aufgebracht, das ausschließlich das benetzbare Material benetzt. Die freibleibenden Abschnitte des nicht-benetzbaren Materials bilden dann Vertiefungen. Das Aufbringen von Erhebungen erfolgt durch Drucker oder Walzen, die kleine Mengen von Beschichtungsmaterial (Lack, Tinte, Farbe) aufbringen. Besonders bevorzugt wird es, wenn Dekor und Struktur synchron aufgebracht werden. D. h., wenn z. B. Poren, die im Dekor farbig aufgetragen sind, mit einer Struktur korrespondieren. Auf diese Weise wird z. B. ein Holzdekor besonders naturnah nachgeahmt.

Alternativ kann eine Struktur auch unabhängig vom Dekor aufgebracht werden. Meist wird dann ein mattierender Effekt oder eine Oberfläche gewünscht, die keine Fingerabdrücke zeigt. Schließlich können auch eine vom Dekor unabhängige Struktur und eine mit dem Dekor synchrone Struktur kombiniert werden.

Die Beschichtung, die nach dem erfindungsgemäßen Verfahren auf das plattenförmige Werkstück aufgebracht wird, kann beispielsweise ein Kunstharz oder einen Lack aufweisen. Bevorzugt werden Melamin-Formaldehyd-Harze eingesetzt. Als Lacke werden vorzugsweise strahlungshärtende Lacke (elektronenstrahlhärtende Lacke oder UV-Lacke) eingesetzt. Kunstharz kann unmittelbar, z. B. in flüssiger Form aufgetragen werden, wobei es bevorzugt ist, Kunstharz in mehreren Schichten aufzutragen, vorteilhaft ca. 20 g/m² bis 100 g/m² in beispielsweise 2 bis 10 Schichten. Als Kunstharz wird z. B. Melamin-Formaldehyd-Harz aufgetragen. Das Kunstharz weist meist einen Feststoffgehalt, d. h. Anteil des Kunstharzes an der Gesamtmenge des Kunstharzes, von 40% bis 70%, bevorzugt von 55% bis 70% auf.

Das Kunstharz kann Zuschlagstoffe enthalten, z. B. Korund oder Glas- bzw. Keramikpartikel. Diese Zuschlagstoffe verbessern z. B. die Abrieb- bzw. Kratzfestigkeit der Oberfläche des erfindungsgemäßen Werkstücks. Andere Zuschlagstoffe, wie z. B. Graphit oder Metallpartikel bzw. -fasern, verbessern die Leitfähigkeit der Oberfläche des plattenförmigen Werkstücks. Die Zuschlagstoffe, die einen Durchmesser von 5 µm bis 100 µm, bevorzugt von 20 µm bis 90 µm aufweisen, alternativ eine Körnung von F180 bis F240 nach FEPA-Standard, werden dem Kunstharz in einer Menge von meist 5 g/m² bis 100 g/m² zugesetzt, vorteilhaft von 10 g/m² bis 60 g/m². Insbesondere die Zuschlagstoffe, die die Kratzfestigkeit und die Abriebfestigkeit verbessern, sind bevorzugt nicht in der äußersten, die Außenseite der Beschichtung bildenden Kunstharzschicht enthalten.

Die einzelnen Kunstharzschichten werden vorteilhaft, z. B. mittels Heißluft oder IR-Strahlung, zwischengetrocknet bis auf einen Feuchtegehalt von 5% bis 25%, bevorzugt von 4% bis 10%. Anschließend wird die vollständig aufgetragene Kunstharzbeschichtung in einer Presse, z. B. einer Kurztaktpresse, unter Einwirkung von Druck und erhöhter Temperatur ausgehärtet. Typische Pressbedingungen umfassen eine Temperatur von 160 °C bis 220 °C, bevorzugt von 180 °C bis 200 °C, einen Pressdruck von 20 kg/cm² bis 30 kg/cm², bevorzugt von 22 kg/cm² bis 28 kg/cm² und eine Presszeit von 5 Sekunden bis 60 Sekunden, bevorzugt von 5 Sekunden bis 30 Sekunden.

Die Beschichtung kann auch in Form von Papieren und/oder in Form von Folien aufgebracht werden. Insbesondere kunstharzgetränkte Papiere, in denen das Kunstharz zwar getrocknet aber noch reaktiv ist, werden gern zur Beschichtung der Oberfläche des plattenförmigen Werkstücks eingesetzt. Das Kunstharz wird bei dieser Ausführung auf eine Lage Papier aufgetragen, wonach es getrocknet, aber nicht ausgehärtet wird.

Dieser Vorgang wird auch als Imprägnieren bezeichnet. Das Imprägnieren kann in mehreren Schritten erfolgen, optional mit einer Zwischentrocknung des bereits aufgetragenen Kunstharzes. Auch hier können unterschiedliche Kunstharze oder Mischungen von Kunstharzen aufgetragen werden. Auch hier können die vorstehend genannten Zuschlagstoffe in den Mengen und Größen wie vorstehend genannt zugesetzt werden, auch hier bevorzugt nicht in der Kunstharzschicht, die die spätere Außenseite der Beschichtung bildet. Ganz allgemein können auch Mischungen aus flüssigem Kunstharz und Kunstharz in Pulverform eingesetzt werden, sowohl zum unmittelbaren Auftrag auf das plattenförmige Werkstück als auch zum Tränken von Papier. Ein oder mehrere kunstharzgetränkte Papiere können auf die Oberfläche des plattenförmigen Werkstücks aufgelegt werden. Sie werden dann in einer Presse, insbesondere einer Kurztaktpresse mit dem plattenförmigen Werkstück verpresst, wobei das Kunstharz zunächst verflüssigt und dann ausgehärtet wird. Die Pressbedingungen entsprechen denen, die vorstehend für das Aushärten einer flüssig aufgetragenen Kunstharzbeschichtung genannt wurden.

Lack kann zur alleinigen Oberflächenbeschichtung des plattenförmigen Werkstücks eingesetzt werden; bevorzugt auch hier in einem mehrschichtigen Auftrag. Alternativ kann Lack auch auf eine Kunstharzbeschichtung aufgetragen werden, insbesondere um die Außenseite einer Beschichtung zu bilden. Ebenso können mit Lack getränkte Papiere eingesetzt werden, bei denen der Lack nach dem Imprägnieren getrocknet bzw. ausgehärtet wird. Lacke aber auch Kunstharze können in flüssiger Form, aber auch als Feststoff, z. B. in Form von Partikeln eines Pulverlacks, eingesetzt werden. Auch Kunstharz, z. B. Melamin-Formaldehyd-Harz, kann in Form eines Pulvers eingesetzt werden. Das Pulver wird unter Einwirkung von Druck und erhöhter Temperatur aufgeschmolzen, verfließt in der Regel zu einer geschlossenen Beschichtung und härtet aus. Flüssiger Lack kann durch Spritzen, Walzen und/oder Gießen aufgetragen werden. Das Werkstück kann auf sämtlichen Seiten (Oberseite, Unterseite, Seitenflächen) lackiert werden, insbesondere können auch profilierte Oberflächen lackiert werden, z. B. solche, die mit einer V-Fuge versehen sind, die in eine Seite des Werkstücks eingebracht sind. Lack kann als unpigmentierter oder pigmentierter Lack eingesetzt werden. Lack kann die vorstehend im Zusammenhang mit dem Aufbringen von Kunstharz genannten Zuschlagstoffe aufweisen. Lack kann als transparenter oder opaker Lack eingesetzt werden. Lack kann aufgewalzt, gesprüht, gedruckt oder gerakelt werden. Lack wird vollflächig oder abschnittsweise auf die Oberfläche des erfindungsgemäßen Werkstücks aufgetragen. Lack wird in einer Menge von 5 g/m² bis 300 g/m² auf die Oberfläche eines plattenförmigen Werkstücks aufgetragen, was auch das Auftragen auf eine bereits vorhandene Beschichtung oder Grundierung einschließt. Bevorzugt wird elektronenstrahl- oder UV-härtender Lack aufgetragen. Weiter ist es von Vorteil, beim mehrschichtigen Auftragen von Lack eine bereits aufgetragene Schicht Lack anzugelieren, also zum Teil auszuhärten, bevor die nächste Schicht Lack aufgetragen wird. Abschließend wird eine mehrschichtige Beschichtung mit Lack vollständig ausgehärtet.

Eine andere Alternative zur Beschichtung der Oberfläche des erfindungsgemäßen plattenförmigen Werkstücks ist der Auftrag eines Hotmelts, z. B. eines Polyurethan-Hotmelts (PU-Hotmelt), eines Polyester-, Polyamid-, Polyolefin- oder Polyacetat-Hotmelts, z. B. Ethylvinylacetat-Hotmelts. Allgemein können Thermoplaste, insbesondere nachvernetzende Thermoplaste als Hotmelts eingesetzt werden. Hotmelts können ein- oder mehrschichtig aufgetragen werden, wobei der mehrschichtige Auftrag bevorzugt ist. Hotmelts können dieselben Zuschlagstoffe aufweisen, wie sie vorstehend für das Aufbringen von Kunststoff beschrieben wurden. Hotmelts können unpigmentiert oder pigmentiert eingesetzt werden, wobei der Anteil an Pigmenten bis zu 30 Gew.-% betragen kann. Hotmelts können transparent oder opak sein. Ein Hotmelt kann vollflächig oder abschnittsweise auf die Oberfläche des erfindungsgemäßen Werkstücks aufgetragen werden. Ein Hotmelt wird in einer Menge von 10 g/m² bis 300 g/m², bevorzugt in einer Menge von 50 g/m² bis 200 g/m² aufgetragen. Ein Hotmelt wird durch Abkühlen fixiert, nachdem der Hotmelt bei einer Temperatur von 80 °C bis 160 °C, meist von 100 °C bis 130 °C aufgetragen wird. Ein Hotmelt kann aufgewalzt, aufgerakelt oder aufgesprüht werden. Eine bereits aufgetragene und vorzugsweise bereits abgekühlte Schicht Hotmelt kann bedruckt werden, insbesondere mit wasserbasierter oder UV-trocknender Druckfarbe bzw. Tinte. Eine Hotmelt-Beschichtung wird zudem oft mit einer Lackschicht kombiniert, meist mit einer abschließenden, äußeren Lackschicht, die die Außenseite des beschichteten plattenförmigen Werkstücks bildet. Ein Hotmelt wird zudem auch häufig -wie nachstehend erläutert- zum Fixieren von anderen Beschichtungsmaterialien eingesetzt, insbesondere in Kombination mit laminierten Werkstoffen wie Continuous Pressure Laminate (CPL) oder High Pressure Laminate (HPL). In diesem Fall ist der Hotmelt jedoch nicht als Oberflächenbeschichtung, sondern als Klebstoff für andere Beschichtungswerkstoffe anzusehen.

Schließlich kann die Gebrauchstüchtigkeit der Oberfläche des erfindungsgemäßen Werkstücks dadurch verbessert werden, dass eine Kaschierung aufgebracht wird. Die Kaschierung weist eine Beschichtung mit meist gebrauchsfertiger Außenseite auf, die auf den erfindungsgemäßen Werkstoff aufgeklebt wird, z. B. wie vorstehend beschrieben, mittels eines Hotmelts oder mittels eines Klebstoffs. Eine typische Ausführung einer Kaschierung ist ein CPL oder HPL, das z. B. aus einer Mehrzahl von kunstharzimprägnierten Papieren besteht, wobei die kunstharzimprägnierten Papiere oder Folien unter Aushärten des Kunstharzes bereits miteinander verpresst wurden. Das CPL oder HPL oder auch andere Beschichtungen mit gebrauchsfertiger Oberfläche werden typisch mit einem Hotmelt als Klebstoff auf die Oberfläche des plattenförmigen Werkstücks aufgebracht. Das Aufpressen der Kaschierung erfolgt z. B. bei 80 °C bis 200 °C in einer Kaschierpresse bei einem Druck von bis zu 300 N/cm². Die Pressdauer ist kurz und liegt meist bei maximal 1 Sekunde. Kaschieranlagen sind z. B. als Vakuumpressen oder als Kalanderanlagen ausgebildet.

Wenn auch die Oberfläche einer Kaschierung an sich bereits gebrauchsfertig ist, so schließt dies nicht aus, dass eine weitere Beschichtung oder Versiegelung aufgebracht wird, sei es aus ästhetischen Gründen oder zur weiteren Verbesserung der Gebrauchstüchtigkeit. Typisch ist z. B. das Aufbringen eines Lacks in einer oder mehreren Schichten, sei es, um z. B. besondere optische Effekte zu erzielen oder weil beispielsweise mindestens eine Lackschicht Korund für die Verbesserung der Abriebfestigkeit oder, um die Kratzfestigkeit weiter zu verbessern, Aerosile enthält.

Es hat sich auch herausgestellt, dass die Oberfläche des Werkstücks, die überwiegend Bindemittel, insbesondere Melamin, aufweist, daneben aber auch lignocellulosische Fasern, gut bedruckbar ist. Das Bedrucken kann mit analogen Mitteln, z. B. mit Walzen, erfolgen, es kann aber auch mit digitalen Mitteln, z. B. mit Tintenstrahl- oder Laserdruckern, erfolgen. Die mit Druckfarbe mindestens abschnittsweise beschichtete Oberfläche des Werkstücks kann durch Aufbringen weiterer Beschichtungen optional versiegelt werden. Geeignet hierfür sind z. B ein ein- oder mehrschichtig aufgebrachter Lack, ein ein- oder mehrschichtig aufgetragener Hotmelt oder eine ein- oder mehrschichtige Kunstharzbeschichtung, z. B. in Form eines Overlays oder eines flüssig aufgebrachten Kunstharzes.

Es hat sich herausgestellt, dass Beschichtungen einschließlich der vorstehend beschriebenen Druckfarbe gut auf der Oberfläche des erfindungsgemäßen Werkstücks haften. Dies schließt nicht aus, dass zur weiteren Optimierung der Haftung Primer oder Grundierungen eingesetzt werden. Beispielsweise kann ein Kunstharz als Primer aufgebracht werden, um die Haftung weiterer Schichten gleicher oder unterschiedlicher Beschichtungen zu verbessern. Des Weiteren kann eine Grundierung eingesetzt werden, um die Farbgebung des plattenförmigen Werkstücks zu vereinheitlichen. Als Grundierung kann z. B. ein pigmentiertes Kunstharz, ein pigmentierter Lack oder ein pigmentierter Hotmelt eingesetzt werden. Falls es zum Auftragen einer weiteren Beschichtung bzw. einer weiteren Lage bzw. Schicht der Beschichtung erforderlich ist, kann ein Primer auch auf eine vorhandene Beschichtung aufgebracht werden.

Es hat sich herausgestellt, dass eine Beschichtung nur auf der Ober- oder der Unterseite des plattenförmigen Werkstücks in weitaus geringerem Maße zu einer Durchbiegung führt als bei plattenförmigen Werkstücken aus anderem Material, z. B. aus Holzspan- oder -faserplatten. Trotzdem kann eine einseitige Beschichtung in einzelnen Fällen dazu führen, dass eine unerwünschte Durchbiegung des Werkstücks auftritt. Um dem entgegenzuwirken bzw. um eine solche Durchbiegung zu vermeiden, wird bevorzugt ein Gegenzug auf die der Beschichtung entgegengesetzte Seite des Werkstücks aufgebracht. Der Gegenzug kann gleich, ähnlich oder anders als die Beschichtung aufgebaut sein. Wesentlich ist lediglich, dass der Gegenzug die Verformungskräfte mindestens teilweise kompensiert, die durch die einseitige Beschichtung auf den plattenförmigen Werkstoff einwirken. In der Regel weist der Gegenzug kein Dekor bzw. keine Struktur auf, obwohl Dekor und/oder Struktur durchaus genauso wie bei der Beschichtung aufgebracht werden können, insbesondere, wenn z. B. sowohl Ober- als auch Unterseite des erfindungsgemäßen Werkstücks in der späteren Verwendung sichtbar sind.

Nach einer weiteren Alternative kann insbesondere auf die Unterseite des Werkstücks eine Trittschalldämmung aufgebracht werden, insbesondere aufgeklebt oder aufkaschiert werden.

Das erfindungsgemäße Werkstück aus dem durch eine Beschichtung ertüchtigten Werkstoff ist in einer bevorzugten Ausführung in Paneele aufgeteilt, wobei das Werkstück bzw. die Paneele mit mindestens zwei einander gegenüberliegenden, bearbeiteten, insbesondere profilierten Kanten versehen sind. Ein vorteilhaftes Kantenprofil basiert auf einem Nut-Feder-Profil, weist jedoch bevorzugt zusätzlich Abschnitte auf, die ein Auseinanderziehen in der Plattenebene verhindern.

Das wie vorstehend beschichtete und ggf. in Paneele aufgeteilte erfindungsgemäße Werkstück kann vielfältig verwendet werden, insbesondere wenn profilierte Kanten vorgesehen sind. Typische Verwendungen sind Fußboden-, Wand- und/oder Deckenbeläge.

Soweit im Rahmen dieser Beschreibung einschließlich der nachfolgenden Ausführungsbeispiele Merkmale betreffend die Beschichtung einer Trägerplatte erläutert sind, können, unabhängig von der Offenbarung in einem speziellen Zusammenhang, diese einzelnen Merkmale, soweit technisch möglich, frei kombiniert werden, also auch in anderen Beschichtungen der Trägerplatte eingesetzt werden.

Details der Erfindung werden nachfolgend an Hand von Ausführungsbeispielen näher erläutert.

Soweit im Folgenden eine Trägerplatte als Werkstück beschichtet wird, ist stets eine Trägerplatte gemeint, die aus 54 Gew.-% Melaminharz und 45 Gew.-% Holzfaser sowie 1 Gew.-% Paraffin aufgebaut ist. Je nach Bedarf kann ein höherer Anteil Bindemittel eingesetzt werden, z. B. 56 Gew.-%, 58 Gew.-% oder 60 Gew.-% Anteil Bindemittel. Der Anteil des Paraffins bleibt stets gleich. Die Trägerplatte weist eine Dicke von 8 mm auf. Die Dicke kann jedoch ohne Weiteres zwischen z. B. 4 mm und 12 mm gewählt werden, in besonderen Fällen bzw. für besondere Einsatzzwecke kann die Dicke auch noch geringer oder noch größer gewählt werden. Die Trägerplatte wird durch Vermischen von Bindemittel und Fasern, Streuen eines Faserkuchens und Verpressen in einer Presse hergestellt. Die Trägerplatte weist ein Großformat von 2800 mm × 2070 mm auf. Die Trägerplatte wird für die nachfolgend geschilderten Ausführungsbeispiele als unbeschichtete Platte eingesetzt.

Soweit im Folgenden für ein Ausführungsbeispiel Bereiche angegeben sind, z. B. für Dekorrohpapier, die Anzahl von Druckfarben oder die Menge des eingesetzten Lacks, Kunstharzes oder Hotmelts, merken wir an, dass die Erfindung über den gesamten angegebenen Bereich ausgeführt werden kann. Die Angabe eines Bereichs zeigt lediglich die Flexibilität des erfindungsgemäßen Verfahrens bzw. die vielfältigen Beschichtungsmöglichkeiten des erfindungsgemäßen Werkstücks. Gleiches gilt für die Angabe von Alternativen, z. B. zum Aufbringen von Druckfarbe oder Tinte oder zum Aufbringen von Beschichtungen.

Soweit nachfolgend der Einsatz von Kunstharz beschrieben wird, wird in der Regel ein Kunstharz eingesetzt, das die üblichen Hilfsstoffe wie Härter, Netzmittel usw. enthält, die in der Regel 1 Gew.-% bis 5 Gew.-% der insgesamt eingesetzten Menge an Kunstharz betragen.

### Ausführungsbeispiel 1

### Trägerplatte mit Papieraufbau verpresst

Auf die Oberseite der Trägerplatte werden ein Dekorpapier und ein Overlay aufgelegt, ein optional eingesetzter Gegenzug wird unter die Unterseite der Trägerplatte gelegt und dieser Pressgutstapel aus vier Schichten wird in einer Kurztaktpresse verpresst. Overlay, Dekorpapier und der optional eingesetzte Gegenzug werden jeweils als kunstharzgetränkte Papierimprägnate eingesetzt. Es entsteht eine beschichtete Trägerplatte, die eine höhere Beständigkeit gegen Säuren und Laugen aber auch eine verbesserte Abriebfestigkeit jeweils gegenüber der unbeschichteten Trägerplatte und ein ästhetisch ansprechendes Dekor mit synchroner Struktur aufweist.

Eingesetzt wird für das Ausführungsbeispiel 1 ein Dekorpapier als Papierimprägnat mit einem Gesamtgewicht von 110 bis 200 g/m², basierend auf
- einem Dekorrohpapier mit einem Gewicht von 50 bis 90 g/m², mit
- einem Dekoraufdruck aus 1 bis 6 Farben, hergestellt aus analog, z. B. mittels Druckwalze, und/oder digital, z. B. mittels Tintenstrahldrucker, aufgebrachten, pigmentieren Tinten. Die Tinten sind wasserbasiert, können also nach dem Auftragen mit Warmluft getrocknet werden, oder die Tinten sind UV-härtbar und können nach dem Auftragen mit UV-Strahlung gehärtet werden. Weiter erfolgt zur Herstellung des Dekorpapierimprägnats,
- einer vor oder nach dem Bedrucken durchgeführten Harzimprägnierung auf der Basis von Harnstoff- oder Melaminharz oder einem Gemisch der beiden Harze, wobei das Kunstharz flüssig oder als Feststoff, insbesondere pulverförmig aufgebracht wird. Anschließend wird das Kunstharz getrocknet, aber noch nicht ausgehärtet, bis es im Zustand B mit einem Gewicht von 60 g/m² bis 110 g/m² vorliegt.

Weiter wird ein Overlay als Papierimprägnat mit einem Gesamtgewicht von 120 bis 400 g/m² eingesetzt, basierend auf
- einem Rohpapier mit einem Gewicht von 25 g/m² bis 70 g/m²,
- einer Harzimprägnierung auf Basis von Melaminharz, das wässrig oder als Feststoff, insbesondere pulverförmig aufgebracht wird, und das nach der Trocknung im Zustand B mit einem Gewicht von 85 g/m² bis 280 g/m² vorliegt, sowie
- einer Füllung mit Korund der Spezifikation F 180 bis F 240 (gemäß FEPA-Standard) in einer Menge von 10 g/m² bis 50 g/m², wobei der Korund entweder gestreut oder in Mischung mit dem Kunstharz aufgetragen wird.

Schließlich wird optional ein Gegenzug als Papierimprägnat mit einem Gesamtgewicht von 150 g/m² bis 240 g/m² eingesetzt, basierend auf
- einem Rohpapier mit einem Gewicht von 70 g/m² bis 120 g/m²,
- einer Harzimprägnierung auf Basis von Harnstoff- und/oder Melaminharz oder Gemischen aus den beiden Harzen, welche wässrig oder als Feststoff, insbesondere pulverförmig aufgebracht wird, im Zustand B mit einem Gewicht von 80 bis 120 g/m² vorliegt.

Alternativ zu einem Gegenzug kann eine Trittschalldämmung auf der Unterseite der Trägerplatte angebracht werden.

Die weitere Herstellung der Beschichtung auf dem Werkstück erfolgt, indem ein Pressgutstapel hergestellt wird, der von oben nach unten das Overlay als Papierimprägnat, das Dekorpapier als Papierimprägnat, die Trägerplatte und optional den Gegenzug als Papierimprägnat aufweist, der in einer Kurztakt-Heißpresse zu einem Laminat verpresst wird, wobei die Kurztaktpresse ein oberes Pressblech aufweist, das auf das Overlay einwirkt, und wobei
- unter Wirkung von erhöhtem Druck von mind. 25 kg/cm² und erhöhter Temperatur von 200 °C,
- einer Presszeit von 6 Sekunden bis 30 Sekunden,
- unter Ausbildung einer Oberflächenstruktur, die optional auf das Dekor angepasst ist (sogenanntes "embossed in register"), ein Laminat hergestellt wird.

Optional kann auf das Overlay, in das eine Struktur eingeprägt ist, noch eine ein- oder mehrschichtige Lackschicht aufgebracht werden, insbesondere um Oberflächeneigenschaften wie Glanz, Hochglanz oder Mattheit der Oberfläche einzustellen oder um Anti-Fingerprint-Eigenschaften zu schaffen. Der Lack wird bevorzugt als UV-Lack aufgebracht, meist in zwei bis drei Schichten, wobei bevorzugt bei mehrschichtigem Lackauftrag nach dem Aufbringen jeder Lackschicht die bereits aufgetragene Schicht angeliert wird. Nach dem Auftragen der letzten Lackschicht erfolgt das vollständige Aushärten der Lackschichten. Das Haften der Lackschicht auf dem Overlay kann optional verbessert werden, indem ein Primer auf das Overlay aufgetragen wird, bevor der Lack aufgetragen wird.

Dieses Verfahren ist z. B. geeignet zur Erzeugung von Laminaten der Nutzungsklasse 23 bis 34 nach EN 16511. Im Weiteren erfolgt ein Zerteilen der beschichteten Trägerplatte in rechteckige Paneele mit einer Länge von 1000 bis 2800 mm und einer Breite von 90 bis 500 mm. An die Paneele werden Verbindungsmittel nach Art einer Nut und Feder an vier Seitenflächen angearbeitet, die optional mit Verriegelungselementen ausgestattet sind, zur Ausbildung von Verriegelungsprofilen mit denen benachbarte Paneele in horizontaler und in vertikaler Richtung in einem schwimmenden Verbund verlegt und verriegelt werden (so genannte Klickpaneele), wobei Verbindungsmittel und/oder Verriegelungselemente aus dem Kernmaterial der Trägerplatte bestehen und dazu aus diesem herausgearbeitet werden oder wobei die Verriegelungselemente als separate Elemente ausgeführt sind, in die das Verriegelungsprofil eingebracht ist und die an die Seitenflächen der Trägerplatte angebracht werden.

Die so als Laminat hergestellte beschichtete Trägerplatte kann unter anderem als Boden-, Wand- oder Deckenbelag, als Konstruktionselement für den Innenausbau, als Konstruktionselement für den Außenbau, im Fahrzeugbau oder zur Gestaltung einer Fassade verwendet werden.

### Ausführungsbeispiel 2:

### Trägerplatte mit Flüssig-Overlay inklusive Dekor-Direktdruck

Hergestellt wird ein Werkstück, hier eine Trägerplatte, die mit flüssigem Kunstharz beschichtet wird, wobei zuvor eine Grundierung auf die Trägerplatte aufgebracht wird und auf diese Grundierung dann ein Dekor im Direktdruck aufgebracht wird. Der Direktdruck wird dann mit flüssig aufgetragenen Schichten aus Kunstharz überzogen, wobei in eine nicht-außenliegende Schicht Korund eingebracht ist. Die so beschichtete Trägerplatte wird in einer Kurztaktpresse (KT-Presse) ausgehärtet. Im Einzelnen wird die Beschichtung des Ausführungsbeispiels 2 wie folgt aufgetragen:
- Grundieren der Platte mit Hilfe eines flüssig aufgetragenen Melaminharzes, eines Harnstoffharzes oder eines Gemisches der beiden Kunstharze in einer Menge von ca. 20 g/m² bis 30 g/m² (Feststoffgehalt: Melaminharz: ca. 65 Gew%, Harnstoffharz: ca. 50 Gew% der insgesamt aufgetragenen Menge an Kunstharz). Der Auftrag erfolgt über Walzen.
- Trocknen des Harzes mit Hilfe eines Umluftrockners oder IR-Strahlern auf einen Feuchtegehalt von ca. 20 %.
- Mehrfaches Auftragen von Farbgrundierung (z. B. Gemisch aus Pigmenten und Bindemittel wie Kasein oder Maisprotein) in flüssiger Form in einer Menge von 5 g/m² bis 10 g/m² (Feststoffgehalt: ca. 50 Gew%) mit Zwischentrocknung z. B. durch Umluft oder IR-Strahler. Der Auftrag der Farbgrundierung erfolgt ebenfalls über Walzenauftrag. Dabei ist die Verwendung von Weißpigmenten (Titandioxid, Calciumcarbonat, Bariumsulfat) bevorzugt.
- Auftrag eines flüssigen Primers, z. B. eines Isocyanat-Primers in einer Menge von ca. 10 g/m² bis 20 g/m² zur Verbesserung der Haftung der nachfolgend aufzutragenden Schichten. Der Primer wird getrocknet durch Umlufttrockner oder IR-Strahler. Es wird wiederum mit einem Walzenauftrag gearbeitet.
- Bedrucken der durch den Primer in ihrer Haftfähigkeit verbesserten Oberfläche entweder analog, z. B. mittels Walze, oder digital, z. B. mit Tintenstrahldrucker mit wasserbasierten Tinten, anschließend Trocknen der Tinte mittels Umlufttrockner, sofern erforderlich.
- Aufbringen einer Versiegelung mittels Walzenauftrag, wobei die flüssige Versiegelung aus Melaminharz (Feststoffgehalt ca. 65 Gew.-%) und darin eingemischten Glaskugeln (Durchmesser Glaskugeln: 70 |um bis 90 µm) besteht. Die Auftragsmenge liegt bei 20 g/m² - 30 g/m². Anschließend erfolgt das
- Trocknen, jedoch nicht Aushärten des Kunstharzes über Umluft oder IR-Strahler bis der B-Zustand erreicht ist, gefolgt vom Abkühlen und Zwischenlagern.
- Aufbringen eines flüssigen Melaminharzes im Walzenauftrag in einer Menge von ca. 60 g/m² bis 80 g/m² (Feststoffgehalt ca. 65 Gew%) auf die bedruckte und bereits durch eine Schicht Kunstharz versiegelte Seite der Platte.
- Aufstreuen von Korund auf das nicht getrocknete, flüssige Melaminharz mit Hilfe einer Streuvorrichtung. Der Korund hat eine Körnung von F180 bis F240 gemäß FEPA-Standard. Die Menge beträgt zwischen 10 g/m² und 50 g/m² Korund, je nach gewünschter Verschleißfestigkeit.
- Mehrfachauftrag (bevorzugt bis zu 5 Schichten) von Melaminharz auf die Oberseite der Platte in einer Menge von 20 g/m² bis 40 g/m², wobei das Melaminharz den vorstehend angegebenen Feststoffgehalt aufweist. Beim Auftragen der letzten Schichten werden dem Harz Glaskugeln (Durchmesser: 70 bis 90 µm) zugegeben. Nach jedem Auftrag erfolgt eine Zwischentrocknung mit Hilfe von Umluft oder IR-Strahlern.
- Parallel zu den Beschichtungen auf der Oberseite kann auch der Auftrag eines flüssigen Melaminharzes auf der Rückseite der Platte erfolgen. Dies kann in einem Teil der Walzenauftragswerke erfolgen und z. B. eine Gesamtmenge von 100 g/m² bis 140 g/m² erreichen. Das Melaminharz weist den üblichen, vorstehend angegebenen Feststoffgehalt auf. Zusätzlich kann noch Farbstoff oder Pigment im Kunstharz enthalten sein. Auch hier ist eine Zwischentrocknung durchzuführen, entweder mittels Umluft oder mittels IR-Strahler.
- Abschließend wird die ein- oder beidseitig beschichtete Trägerplatte in einer Kurztakt-Heißpresse, wie bereits zum Ausführungsbeispiel 1 beschrieben, zu einem Laminat verpresst
   - unter Wirkung von erhöhtem Druck mind. 25 kg/cm² und erhöhter Temperatur von 200 °C und
   - einer Presszeit von 6 bis 30 s,
   - unter Ausbildung einer Oberflächenstruktur oberhalb des Dekors; optional aufeinander angepasst, so genanntes "embossed in register."

Falls eine weitere Bearbeitung der beschichteten Trägerplatte gewünscht ist, kann diese genauso erfolgen wie beim Ausführungsbeispiel 1 beschrieben. Auch die Verwendung der beschichteten Trägerplatte oder eines aus der beschichteten Trägerplatte hergestellten Paneels kann auf die gleiche Weise erfolgen. Die Eigenschaften der gemäß Ausführungsbeispiel 2 beschichteten Trägerplatte sind denen der beschichteten Trägerplatte nach dem Ausführungsbeispiel 1 vergleichbar.

### Ausführungsbeispiel 3:

### Trägerplatte mit Hotmelt-Abdeckung inklusive Dekor-Direktdruck

- Aufbringen eines weißpigmentierten Polyurethan-Hotmelts (PU-Hotmelt) auf die Trägerplatte (Auftragsmenge: ca. 60 g/m² bis 120 g/m²), der bei einer Temperatur von 120 °C flüssig mit Hilfe eines Walzenauftragswerks auf die Oberfläche bzw. Oberseite der Trägerplatte, die hier als Werkstück dient, aufgetragen wird und, falls nötig, Glättung des noch flüssigen Hotmelts in einem zweiten Auftragswerk. Der Anteil an Pigment in der PU-Formulierung liegt bei ca. 20 Gew.-%.
- Abkühlen der Oberfläche.
- Aufdrucken einer weißen, flüssigen Farbschicht mit einem Digitaldrucker (Auftragsmenge: 10 g/m² bis 20 g/m², anschließend ggf. Trocknen der Farbschicht, z. B. durch Umlufttrockner.
- Bedrucken der Oberfläche mit Hilfe eines Digitaldruckers mit einem Dekor unter Verwendung von wasserbasierten- oder UV-Tinten, anschließend ggf. Trocknen der Tinte, z. B. durch Umlufttrockner.
- Aufbringen einer weiteren, nicht pigmentierten PU-Hotmelt-Schicht (Auftragsmenge: 50 g/m²) mit Hilfe eines Walzenauftragsaggregats.
- Einstreuen von Korundpartikeln in den Hotmelt (Korngröße: F180 bis F240 nach FEPA-Standard) mit Hilfe einer Streuapparatur (Auftragsmenge: zwischen 10 g/m² und 50 g/m², je nach gewünschter Abriebfestigkeit).
- Auftrag einer weiteren PU-Schicht (Auftragsmenge: ca. 30 g/m²) mit einem Walzenauftragsaggregat.
- Abkühlen der Oberfläche.
- Lackieren der Oberfläche mit einem UV-Lack, der ca. 30 g/m² Nanopartikel aus Korund zur Verbesserung der Kratzfestigkeit enthält (Lack-Auftragsmenge: 10 g/m² bis 40 g/m²) mit anschließender UV-Härtung.

Auch diese beschichtete Trägerplatte kann wie zum Ausführungsbeispiel 1 beschrieben, in Paneele zerteilt werden und mit Kantenprofilen versehen werden. Die Verwendung der gemäß Ausführungsbeispiel 3 beschichteten Trägerplatte sowie ggf. der daraus hergestellten Paneele ist ebenfalls wie im Ausführungsbeispiel 1 beschrieben.

### Ausführungsbeispiel 4:

### Aufkaschieren einer mehrlagigen Kunststofffolie und Aufbringen eines UV-Lacks

Beschrieben wird das Beschichten eines Werkstücks, hier einer Trägerplatte, mit einer mehrlagigen Kunststofffolie, deren Lagen durch Klebstoff oder Kunstharz miteinander verbunden sind und die durch einen Klebstoff z. B. mit der Oberseite der Trägerplatte verbunden wird. Die Kunststofffolie weist eine gebrauchsfertige Oberfläche auf. Ergänzend wird als Versiegelung ein UV-Lack aufgetragen. Auf die entgegengesetzte Seite der Trägerplatte, hier die Unterseite, wird ein Gegenzug aufgetragen. Die beschichtete Trägerplatte wird hergestellt durch
- Auftragen eines PU-Hotmelts in einer Menge von ca. 100 g/m² auf die Unterseite der Trägerplatte mit Hilfe eines Walzenauftragswerks.
- Auflegen eines Gegenzugs bestehend aus einem Dünnlaminat, einer mehrschichtigen Kunststofffolie oder eines mehrschichtigen, kunstharzgetränkten Papiers auf den PU-Hotmelt.
- Verpressen des Gegenzugs in einer Kaschierpresse bei ca. 120°C bei 300 N/cm² und einer Pressdauer von 0,8 Sekunden.
- Drehen der auf der Unterseite beschichteten Trägerplatte.
- Auftragen von ca. 100 g/m² eines PU-Hotmelts auf der Oberseite der Trägerplatte mit Hilfe eines Walzenauftragswerks.
- Aufbringen einer mehrschichtigen, dekorativen Kunststofffolie oder eines mehrschichtigen, kunstharzgetränkten Papiers, die jeweils aufgebaut sind aus einer innen liegenden Kernlage und einer außen liegenden Dekorfolie, hier jedoch ohne eine Verschleißschicht auf die Schicht aus PU-Hotmelt, die auf die Oberseite der Trägerplatte aufgetragen ist, anschließend
- Verpressen der Folie in einer Kaschierpresse, die als Durchlaufpresse ausgestaltet ist, bei ca. 120°, bei 300 N/cm² und einer Pressdauer von 1 Sekunde, Aufbringen mehrerer Schichten (meist 2 bis 5 Schichten) UV-Lack, wobei die nichtaußenliegenden Schichten zur Erhöhung der Verschleißfestigkeit Korund und zur Erhöhung der Kratzfestigkeit Nanopartikel (z. B. Aerosil ) enthalten, wobei bevorzugt die Partikel zur Erhöhung der Kratzfestigkeit in einer näher zur Außenseite der Beschichtung liegenden Lackschicht aufgetragen sind.
- Angelieren der einzelnen Lackschichten nach jedem Auftrag und Endaushärten nach dem letzten Auftrag mit UV- oder ESH-Strahlern.

Auch diese beschichtete Trägerplatte kann, wie zum Ausführungsbeispiel 1 beschrieben, in Paneele zerteilt werden und mit Kantenprofilen versehen werden. Die Verwendung der gemäß Ausführungsbeispiel 4 beschichteten Trägerplatte sowie ggf. der daraus hergestellten Paneele ist ebenfalls wie im Ausführungsbeispiel 1 beschrieben.

### Ausführungsbeispiel 5:

### Aufkaschieren von CPL/HPL

Das Ausführungsbeispiel 5 ist dem Ausführungsbeispiel 4 ähnlich, allerdings wird ein Dünnlaminat (CPL oder HPL) auf das Werkstück aufgetragen, das eine Verschleißschicht aufweist. Die Beschichtung kann also ohne Lackauftrag erfolgen. Es erfolgt ein
- Walzenauftrag eines PU-Hotmelts in einer Menge von ca. 100 g/m² auf die Unterseite der Platte.
- Auflegen eines Gegenzugs bestehend aus einem Dünnlaminat, einer Kunststofffolie oder eines Papiers auf die Unterseite des Werkstücks, hier der Trägerplatte.
- Verpressen des Gegenzugs in einer Kaschierpresse, hier einer Durchlaufpresse, bei ca. 120°C, 300 N/cm² und einer Pressdauer von ca. 1 Sekunde.
- Drehen der Trägerplatte.
- Walzenauftrag eines PU-Hotmelts in einer Menge von 100 g/m² auf die Oberseite der Platte.
- Auflegen eines CPL- oder HPL-Dünnlaminats, das z. B. die Anforderungen der EN 13329 an die Nutzungsklassen 23 bis 32 erfüllt.
   Verpressen des Aufbaus in der Kaschierpresse bei ca. 120°C, einem Druck von 300 N/cm² und einer Pressdauer von 1 Sekunde.

Falls eine weitere Bearbeitung des Werkstücks, also hier der beschichteten Trägerplatte, gewünscht ist, kann diese genauso erfolgen wie beim Ausführungsbeispiel 1 beschrieben. Auch die Verwendung der beschichteten Trägerplatte oder eines aus der beschichteten Trägerplatte hergestellten Paneels kann auf die gleiche Weise erfolgen. Die Eigenschaften der gemäß Ausführungsbeispiel 5 beschichteten Trägerplatte sind denen der beschichteten Trägerplatte nach dem Ausführungsbeispiel 1 vergleichbar.

### Ausführungsbeispiel 6

### Trägerplatte mit Kunstharzbeschichtung und Lackierung

Auf die Trägerplatte werden unter Verwendung eines Leimes (z. B.: PVAc-Leim, Harnstoffleim usw.) auf der Oberseite eine dekorative Finishfolie und auf der Unterseite ein Gegenzug aufkaschiert. Die Finishfolie hat ein Papiergewicht von ca. 80 g/m² und der Gegenzug hat ein Papiergewicht von ca. 60 g/m²; Finishfolie und Gegenzug sind mit Kunstharz, z. B. Melamin imprägniert. Zum Fixieren der Finishfolie und des Gegenzugs wird jeweils eine Leimmenge von ca. 60 g/m² in flüssiger Form auf die Trägerplatte aufgetragen, bevor Finishfolie bzw. Gegenzug aufgelegt werden.

Die Kaschierung erfolgt in einer Durchlaufpresse bei einer Temperatur von ca. 160°C, einer Geschwindigkeit von 20 m/min und einem Druck von 300 N/cm.

Nach dem Auskühlen und Durchhärten des Leims wird auf die Finishfolie ein korundhaltiger ESH-Lack in (ESH: Elektronenstrahlhärtung) in einer Menge von ca. 90 g/m² aufgetragen (Korundgehalt: ca. 15 Gew.-%). Der Lack wurde mit einem UV-Strahler angeliert. Dann wurde ein ESH-Schleifgrund (Auftragsmenge: ca. 80 g/m²) aufgetragen und mit einem ESH-Strahler angeliert. Im Anschluss daran wurden ca. 20 g eines mit Nanopartikeln gefüllten Decklacks zur Verbesserung der Kratzfestigkeit aufgetragen. Alle Aufträge erfolgten mit Hilfe von Walzenaggregaten. Der Gesamtaufbau wurde dann mit einem weiteren ESH-Strahler durchgehärtet.

Das Produkt erfüllte die Anforderungen der DIN EN 16511 Klasse 33.

### Ausführungsbeispiel 7

### Trägerplatte mit einer auf Lack basierenden Beschichtung

Auf eine Trägerplatte wird auf der Oberseite ein erstes Vorimprägnat aufkaschiert. Das erste Vorimprägnat ist ein in transparentem, getöntem, aber immer noch transparentem oder farbigem Lack getränktes Papier, das durch Trocknen bzw. Aushärten des Lacks zum Vorimprägnat wird. Zum Kaschieren wird auf die Trägerplatte zunächst ein Hotmelt aufgetragen, dann das erste Vorimprägnat aufgelegt und anschließend werden die Trägerplatte und das erste Vorimprägnat durch eine Kaschieranlage geführt, die mit den in den Ausführungsbeispielen 4 oder 5 genannten Bedingungen das erste Vorimprägnat mittels des Hotmelts auf der Trägerplatte fixiert. Wird getönter oder farbiger Lack eingesetzt, so zeigt die Trägerplatte eine gleichmäßig nach Art einer Grundierung eingefärbte Oberfläche, auf der ein darüber aufgebrachtes Dekor besonders gut zur Geltung kommt.

Auf diese mit einem Vorimprägnat versehene Trägerplatte wird ein zweites Vorimprägnat aufgelegt, das ebenfalls aus einem mit einem Lack imprägnierten Papier besteht. Optional wird ein Primer aufgetragen, um die Haftung des zweiten Vorimprägnats am ersten Vorimprägnat zu optimieren. Es kann z. B. ein Schleifgrund aufgetragen werden, also ein Lack, der es erlaubt, ohne Zwischenschleifen eine weitere Beschichtung aufzutragen. Das zweite Vorimprägnat wird auf dem ersten Vorimprägnat durch Kaschieren fixiert, ebenso wie für das erste Vorimprägnat beschrieben. Alternativ kann das zweite Vorimprägnat durch einen lösungsmittelhaltigen Klebstoff auf dem ersten Vorimprägnat fixiert werden.

Diese Oberflächenbeschichtung zeigt eine gute Spaltfestigkeit, weil das mit Lack getränkte Papier der Vorimprägnate keine Neigung zum Abspalten der Druckfarben des Dekors von der Oberfläche des Papiers aufweist.

Auf die mit dem ersten und dem zweiten Vorimprägnat beschichtete Trägerplatte wird nun eine mindestens einschichtige, bevorzugt jedoch mehrschichtige Lackbeschichtung aufgetragen. Typisch werden zwei oder drei Lackschichten aufgetragen. Optional kann auf das zweite Vorimprägnat ein Primer aufgetragen sein, um die Bindung der Lackschicht an das Vorimprägnat zu verbessern. Alternativ sind der in das zweite Vorimprägnat eingebrachte Lack und die nachfolgend aufgetragene Lackschicht so aufeinander abgestimmt, dass die Lackschicht gut auf dem Lack des zweiten Vorimprägnats haftet.

Optional wird auf der Unterseite der Trägerplatte eine Trittschalldämmung aufgebracht.

## Patentansprüche

1. Verfahren zum Beschichten eines plattenförmigen Werkstücks, wobei das plattenförmige Werkstück aus einem Werkstoff hergestellt ist, der lignocellulosische Fasern und einen Anteil von mehr als 50 Gew.-% Melamin-Formaldehyd-Harze, Phenol-Formaldehyd-Harze, Methylendiphenyldiisocyanat (MDI), auch in emulgierter Form als eMDI, polymeres Diphenylmethandiisocyanat (PMDI), oder Mischungen der vorgenannten Bindemittel aufweist, mit den Schritten:
- Bereitstellen des plattenförmigen Werkstücks, das eine Oberseite und eine Unterseite und Seitenflächen aufweist,
- Auftragen einer Beschichtung,
- Aufbringen eines Dekors,
- Strukturieren der Beschichtung, jeweils mindestens auf einen Abschnitt einer Oberseite, einer Unterseite oder einer Seitenfläche sowie
- ggf. Aushärten der Beschichtung.

2. Verfahren nach Anspruch 1, wobei die Beschichtung ausgewählt ist aus der Gruppe der wärmehärtbaren Kunstharze, beispielsweise Melaminharz, Lacke, beispielsweise UV-härtbare Lacke oder Hotmelt.

3. Verfahren nach Anspruch 1 oder 2, wobei die Beschichtung als flüssige Beschichtung, als partikelförmige Beschichtung, in Form von Papieren und/oder in Form von Folien aufgetragen wird.

4. Verfahren nach einem der vorstehenden Ansprüche, wobei die Beschichtung ein- oder mehrschichtig ist.

5. Verfahren nach einem der vorstehenden Ansprüche, wobei die Beschichtung unter Einwirkung von Druck und/oder Temperatur ausgehärtet wird.

6. Verfahren nach einem der vorstehenden Ansprüche, wobei die Beschichtung durch Strahlung, insbesondere elektronenhärtende Strahlung oder UV-Strahlung gehärtet wird.

7. Verfahren nach einem der vorstehenden Ansprüche, wobei das Strukturieren durch mechanische oder chemische Mittel erzeugt wird.

8. Verfahren nach einem der vorstehenden Ansprüche, wobei die Beschichtung mit Zuschlagstoffen versehen wird.

9. Plattenförmiges Werkstück, hergestellt aus einem Werkstoff, aufweisend lignocellulosische Fasern und mehr als 50 Gew.-% Melamin-Formaldehyd-Harze, Phenol-Formaldehyd-Harze, Methylendiphenyldiisocyanat (MDI), auch in emulgierter Form als eMDI, polymeres Diphenylmethandiisocyanat (PMDI) oder Mischungen der vorgenannten Bindemittel, wobei das plattenförmige Werkstück eine Oberseite, eine Unterseite und Seitenflächen aufweist, wobei Oberseite, Unterseite oder wenigstens eine Seitenfläche mindestens abschnittsweise mit einer Beschichtung versehen sind, die ein Dekor und eine Struktur aufweist.

10. Plattenförmiges Werkstück nach Anspruch 9, wobei ein Primer zwischen dem Werkstück und der Beschichtung oder auf der Beschichtung aufgetragen ist.

11. Plattenförmiges Werkstück nach Anspruch 9 oder 10, wobei ein Klebstoff zwischen dem Werkstück und der Beschichtung aufgetragen ist.

12. Plattenförmiges Werkstück nach einem der Ansprüche 9 bis 11, wobei mindestens zwei einander gegenüberliegende Seitenflächen ein Profil aufweisen.

13. Verwendung des plattenförmigen Werkstücks mit einer Beschichtung nach den Ansprüchen 9 bis 12 als Fußbodenbelag, Wandbelag, Deckenbelag.

## Claims

1. A method for coating a panel-shaped workpiece, wherein the panel-shaped workpiece is produced from a material which has lignocellulosic fibers and a proportion of more than 50 wt.% melamine-formaldehyde resins, phenol-formaldehyde resins, methylene diphenyl diisocyanate (MDI), also in emulsified form as eMDI, polymeric diphenylmethane diisocyanate (PMDI), or mixtures of the aforementioned binders, comprising the steps:
- providing the panel-shaped workpiece which has an upper face and a lower face and lateral surfaces,
- applying a coating,
- applying a decoration,
- structuring the coating, in each case at least on a portion of an upper face, a lower face or a lateral surface, and
- optionally curing the coating.

2. The method according to claim 1, wherein the coating is selected from the group of thermosetting synthetic resins, for example melamine resin, lacquer, for example UV-curable lacquer or hot melt.

3. The method according to claim 1 or 2, wherein the coating is applied as a liquid coating, as a particulate coating, in the form of papers and/or in the form of films.

4. The method according to one of the preceding claims, wherein the coating is single-layered or multi-layered.

5. The method according to one of the preceding claims, wherein the coating is cured by the action of pressure and/or temperature.

6. The method according to one of the preceding claims, wherein the coating is cured by radiation, in particular electron-curing radiation or UV radiation.

7. The method according to one of the preceding claims, wherein the structuring is generated by mechanical or chemical means.

8. The method according to one of the preceding claims, wherein the coating is provided with additives.

9. A panel-shaped workpiece, produced from a material having lignocellulosic fibers and more than 50 wt.% melamine-formaldehyde resins, phenol-formaldehyde resins, methylene diphenyl diisocyanate (MDI), also in emulsified form as eMDI, polymeric diphenylmethane diisocyanate (PMDI), or mixtures of the aforementioned binders, wherein the panel-shaped workpiece has an upper face, a lower face and lateral surfaces, wherein the upper face, lower face or at least one lateral surface are provided at least in some portions with a coating which has a decoration and a structure.

10. The panel-shaped workpiece according to claim 9, wherein a primer is applied between the workpiece and the coating, or onto the coating.

11. The panel-shaped workpiece according to claim 9 or 10, wherein an adhesive is applied between the workpiece and the coating.

12. The panel-shaped workpiece according to one of claims 9 to 11, wherein at least two mutually opposing lateral surfaces have a profile.

13. Use of the panel-shaped workpiece having a coating according to claims 9 to 12 as a floor covering, wall covering, ceiling covering.

## Revendications

1. Procédé de revêtement d'une pièce à usiner en forme de plaque, dans lequel la pièce à usiner en forme de plaque est constituée d'un matériau présentant des fibres lignocellulosiques et une part de plus de 50% en poids de résines de mélamine-formaldéhyde, de résines de phénol-formaldéhyde, d'diisocyanate de diphénylméthylène (MDI), également sous forme émulsionnée en tant qu'eMDI, de diisocyanate de diphénylméthane polymère (PMDI), ou de mélanges des liants précités, comprenant les étapes suivantes :
- mise à disposition d'une pièce à usiner en forme de plaque présentant une face supérieure et une face inférieure et des surfaces latérales,
- application d'un revêtement,
- dépôt d'un décor,
- structuration du revêtement, respectivement sur une partie au moins d'une face supérieure, d'une face inférieure ou d'une surface latérale, et
- durcissement éventuel du revêtement.

2. Procédé selon la revendication 1, dans lequel le revêtement est sélectionné parmi le groupe comprenant des résines synthétiques thermodurcissables, par exemple de la résine de mélamine, des laques, par exemple des laques durcissables aux UV ou une colle thermofusible.

3. Procédé selon la revendication 1 ou 2, dans lequel le revêtement est appliqué en tant que revêtement liquide, revêtement particulaire, sous forme de papiers et/ou sous forme de feuilles.

4. Procédé selon l'une des revendications précédentes, dans lequel le revêtement présente une ou plusieurs couches.

5. Procédé selon l'une des revendications précédentes, dans lequel le revêtement est durci sous l'action de la pression et/ou de la température.

6. Procédé selon l'une des revendications précédentes, dans lequel le revêtement est durci par rayonnement, en particulier durci par rayonnement de durcissement d'électrons ou par rayonnement UV.

7. Procédé selon l'une des revendications précédentes, dans lequel la structuration est réalisée par des moyens mécaniques ou chimiques.

8. Procédé selon l'une des revendications précédentes, dans lequel le revêtement est doté d'additifs.

9. Pièce à usiner en forme de plaque, constituée d'un matériau présentant des fibres lignocellulosiques et de plus de 50% en poids de résines de mélamine-formaldéhyde, de résines de phénol-formaldéhyde, d'diisocyanate de diphénylméthylène (MDI), également sous forme émulsionnée en tant qu'eMDI, de diisocyanate de diphénylméthane polymère (PMDI), ou de mélanges des liants précités, dans laquelle la pièce à usiner en forme de plaque présente une face supérieure, une face inférieure et des surfaces latérales, dans lequel la face supérieure, la face inférieure ou au moins une surface latérale sont au moins partiellement pourvues d'un revêtement présentant un décor ou une structure.

10. Pièce à usiner en forme de plaque selon la revendication 9, dans lequel un apprêt est appliqué entre la pièce à usiner et le revêtement ou sur le revêtement.

11. Pièce à usiner en forme de plaque selon la revendication 9 ou 10, dans lequel une colle est appliquée entre la pièce à usiner et le revêtement.

12. Pièce à usiner en forme de plaque selon l'une des revendications 9 à 11, dans lequel au moins deux surfaces latérales opposées présentent un profil.

13. Utilisation de la pièce à usiner en forme de plaque avec un revêtement selon les revendications 9 à 12 comme revêtement de plancher, revêtement de mur ou revêtement de plafond.
